# FASCICULE DE BREVET EUROPEEN

(11) **EP 1 645 888 B1**
(45) Date de publication et mention de la délivrance du brevet: **31.12.2008**
(21) Numéro de dépôt: 04292360.7
(22) Date de dépôt: 05.10.2004
(51) Int. Cl.: G01S 5/14, G06F 3/00

(54) **Dispositif d'assistance au pilotage d'un véhicule en tout terrain**
Vorrichtung zur Steuerungshilfe eines Geländefahrzeugs
Device for assisting the steering of an all terrain vehicle

(43) Date de publication de la demande: 12.04.2006
(73) Titulaire: NEXTER Systems, 42328 Roanne (FR)
(72) Inventeur: Leveque, Stéphane, 78370 Plaisir - Yvelines (FR); Urvoy, Emile, Roussigny 91470 Limours (FR); Pape, Olivier, 78230 Le Pecq (FR)
(74) Mandataire: Célanie, Christian

(56) Documents cités:
- US-A- 4 172 632
- US-A- 4 319 332
- US-A- 6 094 625
- US-B1- 6 275 773

## Description

Le secteur technique de la présente invention est celui de l'assistance au pilotage des véhicules.

Jusqu'à ce jour, le pilotage d'un véhicule en tout terrain s'effectue sans assistance. Le pilote estime les difficultés du terrain, sa carrossabilité, sa franchissabilité en s'aidant uniquement de sa vue et de son expérience. Il dispose d'une perception du relief par l'intermédiaire de sa vision binoculaire, ainsi que d'autres indices de profondeur liés au déplacement, aux ombres, etc., tous obtenus par la vue et les traitements effectués par le cerveau. Il est aidé dans cette tâche perceptive par son expérience, son entraînement et éventuellement par sa connaissance préalable du relief ou de la nature du terrain. Malgré cela, il est rare qu'un pilote utilise une part importante des capacités intrinsèques, notamment en vitesse, de son véhicule. Cette auto-limitation, se traduisant par des vitesses faibles, est d'autant plus importante que le pilote est peu expérimenté. La vitesse peut se réduire encore davantage lorsque, dans le cas d'un véhicule télépiloté, le (télé-)pilote déporté à distance et débarqué du véhicule, ne disposant pas d'une perception directe et complète est incité à la prudence.

On connaît des moyens d'acquérir une cartographie tridimensionnelle du terrain devant le véhicule avec une résolution compatible des besoins de détection permettant d'assurer la sécurité du véhicule, du matériel et des personnels embarqués. Une anomalie du terrain pourra être ignorée, et donc être invisible du moyen d'acquisition du terrain, si son étendue géométrique reste inférieure à un seuil. Ce seuil est déterminable en fonction du véhicule, de ses suspensions et de la capacité de l'ensemble, ainsi que du matériel et des personnels embarqués, à supporter sans dommage une accélération provoquée par le roulage sur ladite anomalie à une vitesse donnée.

Ces moyens d'acquisition du terrain encore appelés imageurs tridimensionnels permettent une acquisition dans un champ de vision et à une fréquence de rafraîchissement comparable à celui, par exemple, d'une caméra vidéo du type de celles utilisées en télépilotage. Cependant l'utilisation de tels imageurs tridimensionnels pour fournir au (télé-)pilote une information pertinente lui permettant d'apprécier les possibilités d'évolution dans la direction qu'il désire prendre ou pour déterminer automatiquement la meilleure trajectoire de cheminement pour le véhicule rencontre des limitations. Si l'on analyse la totalité du champ de vision, le temps nécessaire à l'acquisition du terrain, puis aux traitements permettant de déterminer les paramètres de la carrossabilité n'est pas compatible avec les besoins d'information utile, à la vitesse d'évolution du véhicule. Si a contrario, l'analyse est limitée à une zone partielle du champ de vision complet, on ne sait pas choisir la zone sur laquelle il est intéressant de concentrer l'analyse. Il est en effet difficile de connaître la future zone où va rouler le véhicule, tout en conservant au pilote sa liberté de commande de direction et de choix du parcours emprunté par son véhicule.

Le brevet US-6275773 divulgue un système de pilotage automatique et de prévention des collisions d'un ou de plusieurs véhicules dont les positions sont connues par un moyen de positionnement global de type GPS et pouvant compléter leur information sur l'environnement au moyen de systèmes de perception basés sur des moyens de mesure de type caméras vidéo ou radar pouvant être de type optique (lidar) qui permettent de détecter d'éventuels obstacles en coopération avec un dispositif d'analyse d'image. Le système d'acquisition d'image et le dispositif d'analyse d'image ne sont pas décrits précisément par ce document et on ne connaît pas leur structure. La mise en oeuvre particulière d'une acquisition partielle n'est pas divulguée dans ce document.

Le brevet US-4319332 divulgue un moyen d'acquisition permettant de surveiller une zone en analysant sa surface pour détecter une éventuelle intrusion. Ce moyen d'acquisition est du type de celui mis en oeuvre dans l'invention, à savoir un faisceau permettant une mesure de distance, ledit faisceau étant piloté selon deux axes afin de parcourir la zone à analyser. Ce document ne divulgue cependant pas la mise en oeuvre propre au dispositif selon l'invention, caractérisée par une acquisition partielle.

Le but de l'invention est de proposer un dispositif permettant l'acquisition du terrain suivi par un véhicule de manière rapide.

L'invention a donc pour objet un dispositif d'assistance au pilotage en tout terrain d'un véhicule comprenant un moyen d'acquisition de la géométrie du terrain utilisant un faisceau permettant une mesure de distance dans l'axe dudit faisceau, auquel est imposé un pilotage angulaire selon deux directions sensiblement perpendiculaires, dans un champ de vision situé devant le véhicule, caractérisé en ce que le moyen d'acquisition est relié au véhicule et est configuré pour effectuer une acquisition partielle limitée à une plaque de terrain correspondant à une partie du champ de vision, ladite plaque étant limitée d'un côté proche du véhicule par un premier segment proche, d'un côté distant du véhicule par un second segment distant et latéralement par deux segments reliant les extrémités desdits premier et second segments et ladite plaque comprenant un segment médian.

Le moyen d'acquisition peut être configuré pour effectuer une nouvelle plaque après avoir acquis une plaque précédente.

Avantageusement, le moyen d'acquisition peut être fixé sur le véhicule ou sur un drone mobile indépendamment du véhicule.

Avantageusement, le premier segment proche d'une nouvelle plaque est confondu avec le second segment distant d'une plaque précédente.

Selon une caractéristique de l'invention, le segment médian d'une nouvelle plaque est perpendiculaire au second segment distant de ladite nouvelle plaque, et présente une longueur égale au produit de la vitesse maximale du véhicule par un temps de traitement nécessaire à l'acquisition et au traitement de la plaque, ledit segment médian comprenant une première extrémité et une seconde extrémité, la première extrémité est confondue avec le milieu du premier segment proche de la nouvelle plaque et la seconde extrémité est confondue avec le milieu du second segment distant de la nouvelle plaque.

Selon une autre caractéristique, le segment médian de la nouvelle plaque délimite un angle global avec le segment médian de la plaque précédente, l'angle global étant la somme d'un angle de commande et d'un angle de correction, le véhicule étant commandé en direction suivant un arc de cercle de commande passant par la position du véhicule tangent à l'axe du véhicule et de rayon égal au rayon de virage commandé.

Avantageusement, l'angle de commande est égal à l'angle entre la tangente à l'arc de cercle de commande au point d'intersection entre ledit arc de cercle de commande et le premier segment proche de la nouvelle plaque, avec le segment médian de la plaque précédente.

L'angle de commande est temporellement filtré sur un horizon sensiblement égal à une seconde.

Avantageusement encore, l'angle de correction est égal à une constante de correction que multiplie une distance de correction, cette distance de correction étant mesurée en ligne droite entre un point de commande et la première extrémité du segment médian de la nouvelle plaque, ledit point de commande étant situé sur l'arc de cercle de commande à une distance du véhicule, mesurée le long dudit arc de cercle de commande, ladite distance étant égale à une distance mesurée entre ladite première extrémité (25) et un point de projection, cette distance étant mesurée le long d'une ligne brisée suivant les segments médians, le point de projection étant le point de ladite ligne brisée le plus proche du véhicule.

Au moins une pré-acquisition à maillage grossier d'une plaque est effectuée pour optimiser l'acquisition définitive ultérieure de ladite plaque pour déterminer la pente et le dévers moyen de la plaque, l'acquisition préalable permettant de déterminer une répartition à pas constant, des points d'acquisition sur la plaque, ladite répartition étant utilisée pour l'acquisition définitive.

La plaque est analysée pour déterminer une vitesse maximale de franchissement de ladite plaque.

Selon une caractéristique, la vitesse maximale de franchissement est déterminée par une méthode temporelle simulant le roulage d'un modèle simplifié du véhicule sur la plaque en variant la vitesse dudit modèle jusqu'à dépassement d'un critère d'inconfort et/ou d'instabilité.

Selon une autre caractéristique, la vitesse maximale de franchissement est déterminée par une méthode fréquentielle déterminant la rugosité du terrain et lui faisant correspondre une vitesse maximale de franchissement par un tableau de correspondance pré-établi.

Selon encore une autre caractéristique, la vitesse maximale de franchissement est déterminée par une méthode spatiale consistant à découper la plaque en éléments de relief élémentaires auxquels sont respectivement associées des vitesses maximales de franchissement.

Selon encore une autre caractéristique, la vitesse maximale de franchissement est déterminée par une méthode combinant les méthodes temporelle, fréquentielle, spatiale.

Avantageusement, chaque plaque est visualisée par un quadrilatère, dont les segments des côtés se superposent avec les segments de la plaque.

Selon encore une caractéristique, un chenal est construit en assemblant bout à bout les quadrilatères issus des plaques.

Selon encore une caractéristique, un gabarit de vitesse maximale de franchissement est construit de manière récursive en fonction de la vitesse maximale de franchissement déterminée pour chaque plaque du chenal garantissant que l'on pourra atteindre une plaque donnée à une vitesse inférieure à la vitesse maximale de franchissement de cette plaque.

Avantageusement, le gabarit de vitesse est tel que la décélération maximale, le long de ce gabarit, reste à tout instant inférieure au potentiel d'adhérence disponible.

Selon encore une caractéristique, le chenal constitué de la succession de quadrilatères est projeté en superposition du champ de vision du pilote.

Selon encore une caractéristique, le champ de vision est vu directement et la projection du chenal s'effectue en transparence sur une lame semi-réfléchissante intercalaire.

Le champ de vision est vu sur un écran de visualisation et en ce que le chenal est projeté en transparence sur ledit écran de visualisation.

Selon encore une caractéristique, la représentation graphique des quadrilatères utilise une symbolique graphique pour signifier qu'une plaque est infranchissable.

Selon encore une caractéristique, la représentation graphique des quadrilatères utilise N symboliques graphiques, pour signifier qu'une plaque est franchissable à une vitesse appartenant à l'une des N zones partageant la plage totale de vitesse.

Un avantage du dispositif selon l'invention est de permettre une analyse de la carrossabilité du terrain à partir de sa géométrie acquise en temps réel.

Un autre avantage du dispositif objet de la présente invention est de permettre d'acquérir et d'analyser le terrain en temps réel à des vitesses de progression du véhicule élevées.

Un autre avantage du dispositif objet de la présente invention est de permettre d'augmenter sensiblement la vitesse de progression en sécurité, tant pour un pilote embarqué que pour un télé-pilote.

Un autre avantage du dispositif selon l'invention est de fournir des informations utiles au (télé-)pilote.

Un autre avantage du dispositif selon l'invention est de permettre d'afficher ces informations en superposition avec le champ de vision habituel du (télé)pilote.

Un autre avantage du dispositif selon l'invention est d'indiquer au (télé)pilote un chenal dans lequel il sait qu'il peut progresser et dans lequel il sait que sa vitesse est limitée automatiquement afin d'éviter de mettre le véhicule, son matériel ou son personnel embarqués en danger.

Un autre avantage du dispositif selon l'invention est de permettre d'utiliser un moyen d'acquisition de la géométrie tridimensionnelle du terrain, du type de ceux existant actuellement dans le commerce.

D'autres caractéristiques, détails et avantages de l'invention ressortiront plus clairement de la description détaillée donnée ci-après à titre indicatif en relation avec des dessins sur lesquels :
- la figure 1 présente un véhicule équipé du dispositif, en cours d'évolution sur un terrain accidenté,
- la figure 2 illustre l'utilisation du dispositif en relation avec le terrain, et l'acquisition partielle réduite à une partie du champ de vision,
- la figure 3a illustre une configuration avec le moyen d'acquisition monté sur le véhicule,
- la figure 3b illustre une configuration avec le moyen d'acquisition monté sur un drone,
- la figure 4 illustre le principe du moyen d'acquisition,
- la figure 5a illustre la notion de zone aveugle ou morte et la perte de qualité de l'acquisition à distance,
- la figure 5b illustre l'amélioration de la qualité de l'acquisition obtenue avec la diminution de la distance,
- la figure 6 introduit les distances de freinage et de sécurité,
- la figure 7 précise la construction d'une nouvelle plaque,
- la figure 8 illustre la définition de l'angle de commande,
- la figure 9 illustre la définition de l'angle de correction,
- la figure 10 illustre le chenal carrossable tel que présenté au (télé-)pilote en superposition de son champ de vision,
- les figures 11a et 11b illustrent l'influence de la pente sur la résolution de l'acquisition.

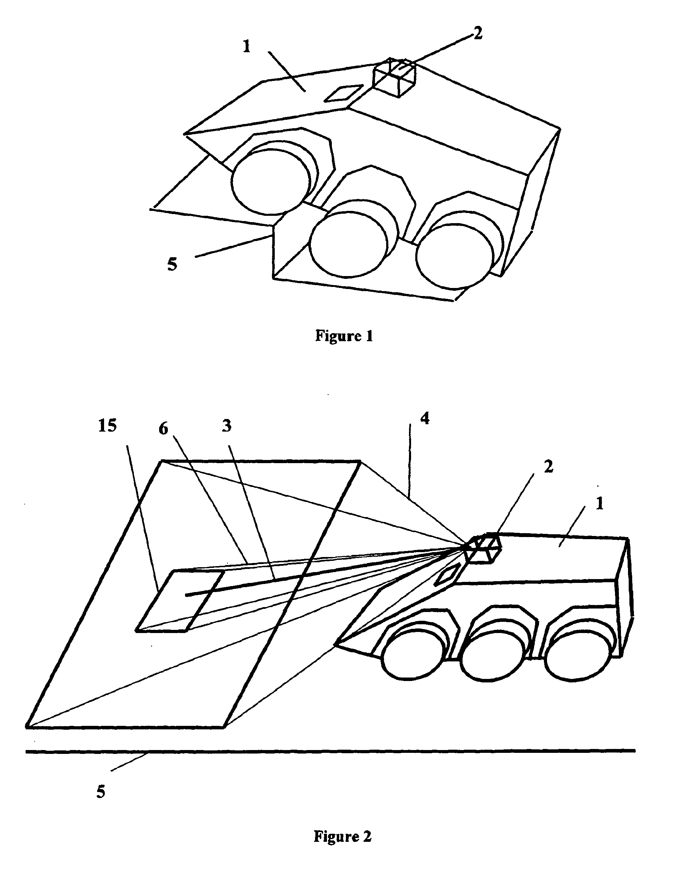

La figure 1 nous montre un véhicule 1 illustratif d'un véhicule pouvant évoluer en tout terrain. Il est ici, par exemple représenté en cours de roulage sur un élément du terrain 5.

La figure 2 présente une vue d'ensemble du dispositif dans son cadre d'utilisation. Le véhicule 1 évolue sur le terrain 5. Le moyen d'acquisition 2 de la géométrie tridimensionnelle du terrain 5 est monté solidaire de la caisse du véhicule, avantageusement sur un point haut, afin d'augmenter l'angle d'incidence de l'acquisition. La géométrie du terrain 5 situé devant le véhicule 1 et que ce dernier va potentiellement parcourir dans un instant à venir, est acquise par le moyen d'acquisition 2 ou imageur tri-dimensionnel. Ce moyen d'acquisition 2 de la géométrie du terrain 5 dispose d'un champ de vision 4 dans la direction de la progression du véhicule 1.

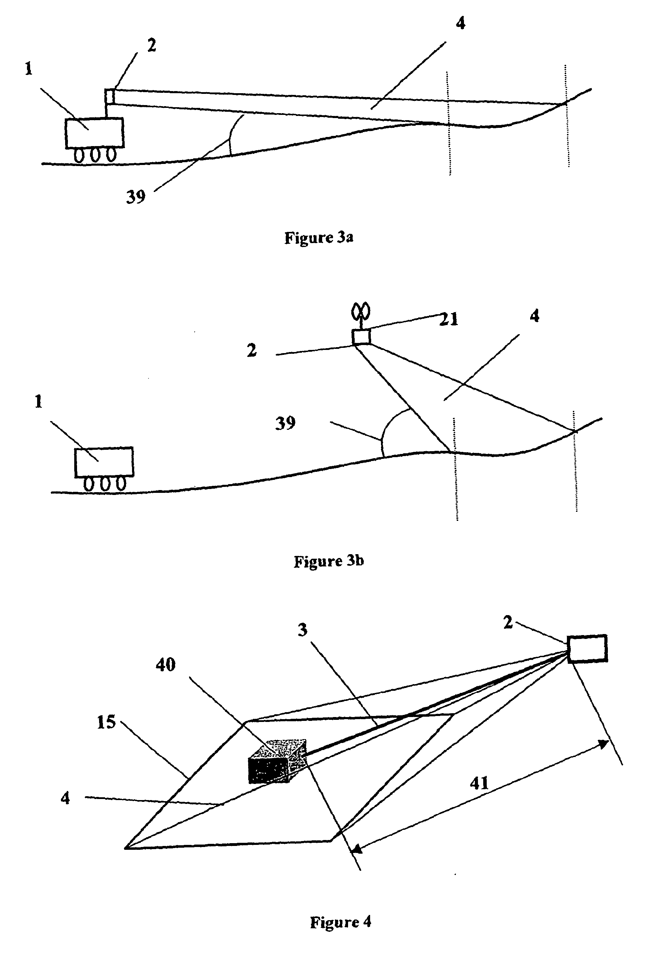

Comme illustré par la figure 3a, Le moyen d'acquisition 2 peut être installé directement sur le véhicule 1. La figure 3b illustre une configuration alternative, dans laquelle le moyen d'acquisition 2 est avantageusement installé sur un drone 21, séparé du véhicule 1. Le déplacement du drone, indépendant de celui du véhicule 1, autorise un positionnement avantageux du point de vision du moyen d'acquisition, permettant de mieux « voir » le terrain 5 dans certaines situations. Le drone 21 se déplace avantageusement en précédant le véhicule 1 afin de recueillir des informations sur le terrain 5. Le mode de locomotion du drone 21 peut être quelconque. Une version aérienne est avantageusement retenue. La figure 3b montre comparativement à la figure 3a, que pour un même champ de vision 4, la position avancée du drone 21, permet de « voir » le terrain 5 avec un angle d'incidence 39 plus important. La qualité de l'acquisition augmente avec l'angle d'incidence 39, ceci constitue un avantage intéressant.

Le principe de l'acquisition est illustré par la figure 4. Le moyen d'acquisition 2 comprend un faisceau 3. Ce faisceau 3 est linéaire, concentré et pointe dans une direction commandable. Il permet par un principe connu de l'homme de l'art de mesurer la distance 41 séparant sa source, ici le moyen d'acquisition 2, d'un obstacle 40 venant, le cas échéant, s'interposer devant ledit faisceau 3. Le faisceau 3 est constitué d'une onde concentrée qui est réfléchie par le terrain 5 en général et par l'obstacle 40 en particulier. Cette onde est avantageusement un faisceau laser. Le moyen d'acquisition est avantageusement orienté légèrement vers le bas, afin que le faisceau 3 rencontre le terrain 5. Ceci permet de connaître, dans la direction pointée par le faisceau 3, la distance entre le terrain 5 et le véhicule 1.

En faisant parcourir à la direction du faisceau 3 un balayage angulaire selon deux directions, avantageusement sensiblement perpendiculaires, par exemple en site et en gisement, et en mesurant la distance 41 au terrain 5 pour chaque valeur d'angle site et d'angle gisement, on cartographie une zone du terrain 5 sensiblement rectangulaire. Pour être exact, cette zone est un secteur sphérique, et l'on considère son intersection, sensiblement rectangulaire, avec la surface du terrain. Le champ de vision 4 désigne la zone totale que peut acquérir le moyen d'acquisition 2, lorsque le balayage en site et en gisement est utilisé au maximum de ses capacités en étendue. Pour chaque angle de site s et pour chaque angle de gisement g, on mesure une distance d. On obtient ainsi une cartographie géométrique du terrain 5, dans le champ de vision 4, sous forme d'un ensemble de triplets (s, g, d). Le profil du terrain est ainsi obtenu en coordonnées sphériques, dans un repère centré sur le moyen d'acquisition 2.

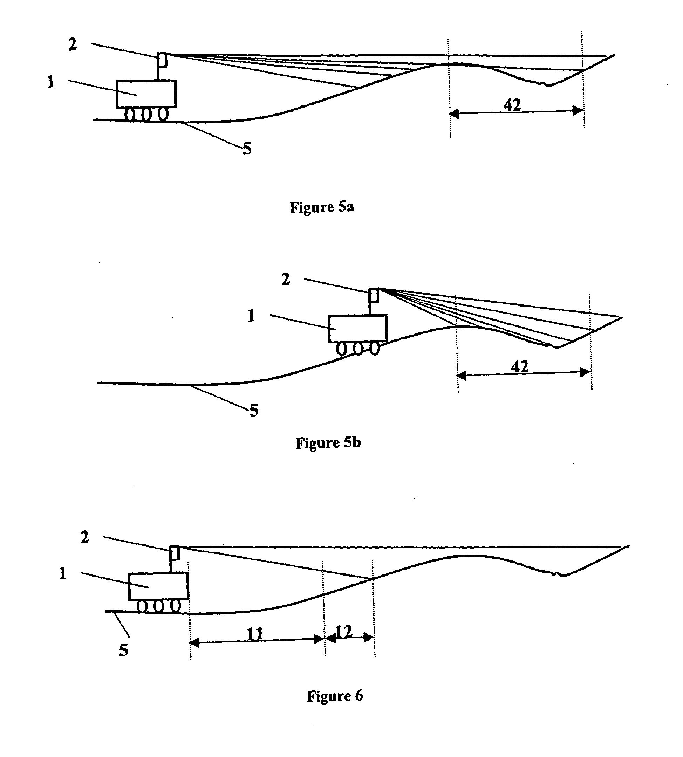

On voit sur la figure 5a, une limitation du principe de mesure. En cas de présence d'une partie de terrain située derrière un élément de relief saillant, le faisceau 3 ne peut rencontrer une partie du terrain et cette partie 42, dénommée zone d'ombre 42, zone morte ou zone aveugle, n'apparaît pas sur la cartographie du terrain 5.

Il en est de même lorsque le faisceau 3 vise trop haut. Si l'incidence 39 est négative ou nulle, par rapport au niveau du sol, le faisceau ne rencontre aucun obstacle, n'est pas réfléchi et aucune mesure de distance 41 ne peut être obtenue. De manière similaire si l'incidence 39 est trop faible, le faisceau 3 peut rencontrer le terrain 5 mais ne pas provoquer une réflexion suffisante pour permettre une mesure.

La résolution d'une telle acquisition, est définie par le nombre de mesures de distance 41 effectuées dans le champ de vision 4. La durée d'une mesure de distance 41 ou, ce qui est équivalent, la fréquence maximale des mesures, limite cette résolution. Cette fréquence est caractéristique du moyen d'acquisition 2. Elle est déterminée par le type d'onde utilisée et par les moyens permettant de faire effectuer au faisceau 3 les balayages angulaires. Elle ne peut, dans l'état actuel de la technologie, pas être augmentée. Les imageurs tri-dimensionnels actuels permettent d'effectuer de l'ordre de cent mille mesures de distances par seconde (100 khertz). On considère que le temps global d'acquisition et de traitement de changement de repère d'un point est inférieur à 30 micro secondes.

Une résolution minimale est nécessaire pour détecter sur le terrain 5 le plus petit obstacle 40 dont la taille est suffisante pour mettre en danger le véhicule 1, le matériel qu'il embarque ou son équipage. Un tel obstacle 40 doit être détecté par le dispositif, un obstacle plus petit pouvant être ignoré. On suppose, à titre illustratif que le véhicule 1, son train de roulement et sa suspension, permettent d'ignorer un obstacle de 10 cm d'extension, quelle que soit la vitesse d'évolution. Ceci permet de considérer une résolution sur le terrain comprenant au moins un point d'acquisition par zone de 10 X 10 cm.

On tente d'atteindre une vitesse objective d'évolution du véhicule 1, fixée en fonction des objectifs opérationnels, à titre indicatif, à une valeur de l'ordre de 10 m/s. Il est nécessaire d'acquérir et d'analyser le terrain 5 avant que le véhicule 1 ne le parcourt.

Une solution pourrait consister à acquérir et analyser le terrain 5 très loin du véhicule afin de disposer de temps. Ceci est limité par plusieurs facteurs :
- la mesure de distance par le faisceau 3 a une limite de portée,
- plus la mesure s'effectue loin et plus l'incidence du faisceau 3 avec le terrain 5 est faible et tend à rendre la mesure impossible,
- plus l'acquisition s'effectue loin et plus il faudrait analyser un terrain large compte-tenu des possibilités de changement de direction du véhicule,
- plus l'acquisition s'effectue loin et plus la résolution est faible : une même variation d'angle site ou gisement correspondant à une plus grande étendue de terrain,
- plus l'acquisition s'effectue loin et plus le risque de zone d'ombre ou masquage est important. La coupure du faisceau par un obstacle saillant proche rend le moyen d'acquisition aveugle sur le terrain situé au-delà dudit obstacle saillant,
- plus l'acquisition s'effectue loin et plus l'imprécision sur la mesure des angles de balayage se rapproche de l'ordre de grandeur de la résolution angulaire.

L'un des principes de l'invention est de déterminer certaines caractéristiques du terrain 5, à l'avant du véhicule 1, avant que ce dernier ne le parcourt.

Compte tenu de l'adhérence et du profil du terrain 5, une certaine accélération/décélération maximale est possible sans perte d'adhérence. Compte tenu de cette décélération maximale admissible, des possibilités de freinage du véhicule 1 et de sa vitesse instantanée, il est possible de déterminer une distance d'arrêt 11, qui est la distance minimale nécessaire au véhicule pour s'arrêter et donc se mettre en sécurité en cas de nécessité. L'acquisition et l'analyse du terrain 5 peut faire apparaître un obstacle infranchissable. Dans ce cas il doit être possible d'arrêter le véhicule 1. Il est donc nécessaire d'effectuer l'acquisition et l'analyse du terrain 5, tant que le véhicule 1 conserve sa distance d'arrêt 11. De plus, on tente de déclencher l'acquisition du terrain 5 le plus tard possible, afin d'obtenir une information la plus pertinente possible.

Compte tenu de ces contraintes, il n'est pas possible, actuellement, d'acquérir la totalité du champ de vision 4 en maintenant des vitesses d'évolutions élevées.

La solution, retenue par l'invention, consiste à réduire la zone d'acquisition à une partie 6 du champ de vision 4, telle qu'illustrée sur la figure 2. Cette partie 6 délimite sur le terrain 5 une plaque 15. Cette partie 6 du champ de vision 4, est déterminée en réduisant l'étendue de balayage par le faisceau 3 en site et/ou en gisement.

Ainsi que l'illustre la figure 6, la plaque 15 acquise par le moyen 2, se situe nécessairement au-delà de la distance d'arrêt 11. De plus l'acquisition et l'analyse qui lui succède, nécessitent un certain temps de traitement 20. A titre d'ordre de grandeur, on considère un temps de cycle complet acquisition et analyse d'une plaque 15 d'environ une seconde. Durant le temps de traitement 20, le véhicule 1 continue son déplacement et parcourt une certaine distance. Cette distance supplémentaire est égale à l'intégrale de la vitesse instantanée du véhicule 1 sur l'intervalle de temps nécessaire au traitement. Cette distance est majoré par une grandeur que l'on nomme marge de distance 12. Cette marge de distance 12 majorante peut, par exemple, être prise égale au produit de la vitesse maximale du véhicule 22 par le temps de traitement 20. Cette valeur constitue une majoration maximale. L'optimisation de cette marge de distance 12, en la réduisant au minimum, permet d'optimiser l'instant du début d'acquisition de la plaque 15, en le retardant le plus possible.

Pour garantir la sécurité du véhicule 1, il est nécessaire d'effectuer l'acquisition de la plaque 15 de terrain 5 au-delà de la distance d'arrêt 11, augmentée de ladite marge de distance 12. Ceci est illustré sur la figure 6. Cette contrainte est garantie par le mode de détermination de la plaque 15 retenu.

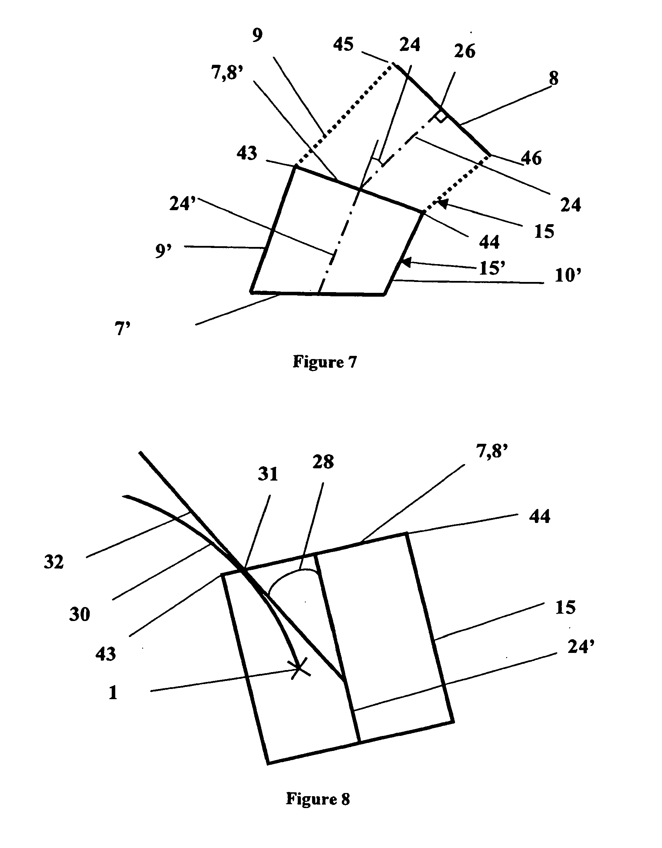

La figure 7 supporte la description détaillée de la construction d'une nouvelle plaque 15 avant son acquisition par le moyen 2. Une plaque précédente 15' ayant été acquise et analysée.

Une plaque 15 est une portion de terrain 5. C'est une surface tri-dimensionnelle. Elle est limitée par quatre segments 7,8,9,10. Un premier segment 7 reliant un point 43 à un point 44 limite la plaque 15 du côté proche du véhicule 1. Un second segment 8 reliant un point 45 à un point 46 limite la plaque 15 du côté distant du véhicule 1. Deux segments latéraux 9,10 complètent la plaque 15 en reliant respectivement 43 à 45 et 44 à 46.

De manière analogue la plaque précédente 15' est limitée par un premier segment proche 7', un second segment distant 8' et deux segments latéraux 9' et 10'.

Le premier segment proche 7 de la nouvelle plaque 15 est avantageusement choisi confondu avec le segment distant 8' de la plaque précédente 15' acquise et traitée précédemment à la nouvelle plaque 15. Une telle construction garantit que la contrainte précédemment évoqué, liée à la distance d'arrêt 11, augmentée de la marge de sécurité 12, est satisfaite. En effet, cette distance, quel que soit le majorant retenu, reste inférieur à la longueur d'une plaque 15, cette longueur étant égale au produit de la vitesse maximale 22 du véhicule 1 par le temps de traitement 20 d'une plaque 15,15'. Le segment 7 est donc ainsi situé au delà de la distance 11 augmentée de la marge de sécurité 12.

Le second segment distant 8 est positionné relativement au premier segment proche 7 de la manière suivante, illustrée par la figure 7. Du point 25 milieu du premier segment proche 7, et faisant un angle global 27 avec un segment médian 24' de la plaque précédente 15', est tracé un segment médian 24. Ce segment médian 24 a une longueur égale au produit du temps de traitement 20 nécessaire à l'acquisition et au traitement de la nouvelle plaque 15, par la vitesse maximale 22 du véhicule 1 considéré. Le point 25 est la première extrémité du segment médian 24. Le second segment distant 8 est perpendiculaire au segment médian 24 et son milieu coïncide avec le point 26, seconde extrémité du segment médian 24.

La détermination de l'angle global 27 d'orientation du segment médian 24, qui détermine l'orientation de la nouvelle plaque 15 est réalisée en ajoutant algébriquement un angle de commande 28 et un angle de correction 29.

La détermination de l'angle de commande 28 est illustrée sur la figure 8. Sur cette figure 8 est représentée la dernière plaque 15' acquise et traitée. Le segment reliant le point 43 au point 44 de cette figure est le second segment 8' distant de cette plaque 15' et aussi le premier segment proche 7 de la nouvelle plaque 15 que l'on cherche à déterminer.

La commande de direction du véhicule 1 est donnée par l'opérateur par un rayon de virage. Cette commande par le rayon de virage peut se représenter, dans le repère véhicule, par un arc de cercle de commande 30. Cet arc de cercle de commande 30 débute sur le véhicule 1, est tangent à l'axe longitudinal dudit véhicule 1 et a un rayon égal au rayon de virage commandé. Cet arc de cercle 30 coupe le premier segment proche 7 de la nouvelle plaque 15 en un point d'intersection 31. La tangente 32 à l'arc de cercle de commande 30 au point d'intersection 31 fait avec le segment médian 24' de la plaque précédente 15' un angle de commande 28.

La commande de direction de l'opérateur variant en permanence, la détermination de l'angle de commande 28 s'effectue avantageusement, en filtrant temporellement, sur un horizon sensiblement égal à une seconde, le résultat du calcul.

Si l'on applique seul cet angle de commande 28 pour orienter la nouvelle plaque 15, il peut apparaître, dans la pratique, une divergence entre la position des plaques 15,15' et la position réelle du véhicule 1. Pour corriger cette divergence, on applique un angle global 27 qui est la somme de l'angle de commande 28 et d'un angle de correction 29.

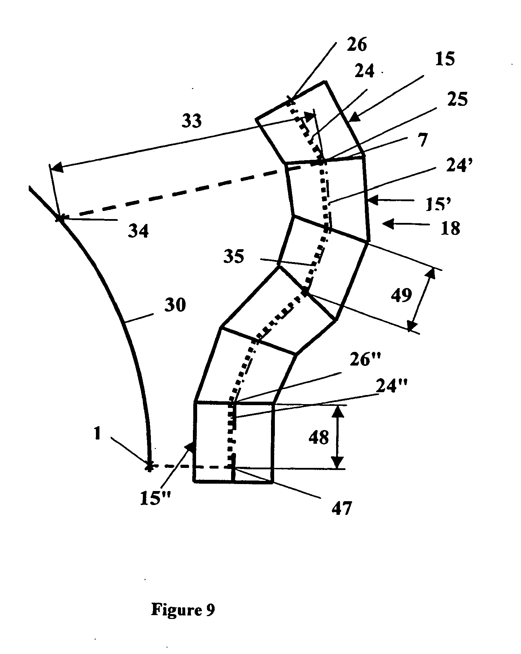

Cet angle de correction 29 est déterminé, par le produit d'une constante de correction 38 par une distance de correction 33 mesurée, comme illustré par la figure 9, entre un point 25 milieu du premier segment proche 7 de la nouvelle plaque 15 (qui est aussi la première extrémité 25 du segment médian 24), et un point de commande 34.

Soit une ligne brisée 35, constitué de la succession des segments médians 24 des plaques successives 15. Un point de projection 47 est déterminé en projetant la position du véhicule 1 sur ladite ligne brisée 35. Ce point de projection 47 est le point de la ligne 35 le plus proche du véhicule 1. On détermine une distance 37, mesurée en suivant le long de la ligne brisée 35 entre le point de projection 47 et le point 25 milieu du segment médian 24 de la nouvelle plaque 15.

Cette distance 37 est égale à une distance 48 restant à courir sur la plaque 15" la plus proche du véhicule 1, soit la distance entre le point de projection 47 et la seconde extrémité 26" du segment médian 24" auquel appartient le point de projection 47, cumulée avec les longueurs 49 des plaques 15,15', 15",...(ou longueurs des segments médians 24,24',24",... ) rencontrées pour rejoindre le point 25 de la nouvelle plaque 15 en suivant la ligne brisée 35. La longueur 49 d'une plaque étant identique à la longueur des autres plaques, la distance 37 est la distance 48 plus n fois la longueur 49 d'une plaque, n étant le nombre de plaques séparant la plaque 15" la plus proche du véhicule 1, de la nouvelle plaque 15.

Le point de commande 34 est situé sur l'arc de cercle de commande 30 à une distance 36 du véhicule 1, prise égale à la distance 37, mesurée le long de l'arc de cercle de commande 30.

Afin d'assurer la convergence entre la position des plaques et la trajectoire 14 du véhicule, le segment 8 distant de la nouvelle plaque 15 est avantageusement déterminé en utilisant pour l'orientation de la plaque 15 l'angle global 27 somme de l'angle de commande 28 et de l'angle de correction 29.

Une limitation de l'acquisition de la plaque 15 est liée au principe de mesure. Du fait de la nécessité pour obtenir une mesure de distance, d'obtenir une réflexion du faisceau 3 sur le terrain 5, il est nécessaire de diriger le faisceau vers le terrain 5 avec une incidence minimale. L'incidence 39 du faisceau 3 dépend de l'orientation locale du terrain à l'endroit où le faisceau 3 le rencontre. L'incidence 39 dépend aussi de l'angle de site du faisceau 3, qui dépend de l'angle de balayage en site du faisceau ainsi que de l'orientation du moyen d'acquisition 2 qui peut dépendre elle-même de l'angle de tangage et dans une moindre mesure de l'angle de roulis du véhicule 1. Si l'incidence 39 devient trop petite et donc inférieure à un certain seuil, la mesure de distance devient impossible. Ceci peut conduire à une limitation de la partie 6 vers le haut, et donc de la plaque 15 sur son côté distant 8.

Les plaques 15 sont acquises et analysées de manière continue. Lorsqu'une plaque précédente 15 est acquise et analysée, il est possible de commencer l'acquisition et l'analyse de la nouvelle plaque 15 suivante. Ceci est réalisé de telle manière que l'assemblage des plaques constitue un chenal continu 18, dont toute la surface fait l'objet d'une analyse.

Dans le cas favorable où il n'y a pas de zone d'ombre, la plaque 15 est effectivement limitée entre les segments 7 et 8. En cas de zone d'ombre 42, il apparaît une zone morte 42 où aucune analyse n'est possible et où la continuité du chenal ne peut être assurée. Ceci peut être pris en compte pour supprimer des points d'acquisition inutiles. Le traitement nécessaire de la discontinuité du chenal est assuré par un ralentissement du véhicule, lui redonnant de la marge de distance et du temps pour reprendre l'acquisition et l'analyse de la plaque 15, tout en espérant une disparition de la zone d'ombre. Le ralentissement est automatiquement introduit par l'affectation temporaire d'une vitesse maximale de franchissement 16 nulle pour la plaque 15 considérée. Cette plaque 15 ne pouvant être analysée est déclarée temporairement infranchissable afin de sécuriser le véhicule le temps d'une ré-analyse ou d'une amélioration de la situation.

Les figures 5a et 5b illustrent cette amélioration. Sur la figure 5a le véhicule 1 est loin de la zone et l'analyse par le moyen 2 fait apparaître une zone 42 aveugle. En l'absence d'information, le doute est permis et la stratégie adoptée reste prudente en attente de plus d'information. Le véhicule 1 en poursuivant son cheminement, arrive dans la configuration favorable de la figure 5b. Dans cette configuration, il n'y a plus de zone aveugle. L'acquisition et l'analyse peuvent se dérouler complètement. Le doute sur la franchissabilité de la zone est levé au profit d'une analyse complète.

Une autre difficulté tient au fait que le pilote reste libre d'agir sur la direction du véhicule 1. Ceci est d'autant plus amplifié que la vitesse et donc la distance d'arrêt 11 qui détermine la distance à laquelle il faut acquérir le terrain 5, augmentent, et que la plaque 15 sur laquelle est effectuée l'acquisition, s'éloigne d'autant du véhicule 1.

La largeur d'une plaque 15, avantageusement prise identique pour toutes les plaques 15, est déterminée par les capacités de l'imageur tri-dimensionnel 2 en terme de résolution. Il est cependant nécessaire que la largeur de la plaque 15 soit un multiple de, soit n fois, la largeur du véhicule 1. Plus n est grand et plus le véhicule est susceptible d'être sur le chenal analysé, malgré les variations de commande de direction. Si la capacité de l'imageur permet d'augmenter n, il devient possible d'augmenter la vitesse maximale d'évolution.

Ladite largeur disponible pour une plaque 15 est répartie en deux parties égales autour du centre déterminé par le point 26, seconde extrémité du segment médian 24, qui détermine la position du segment distant 8 de la nouvelle plaque 15.

Compte tenu des autres paramètres dimensionnants évoqués ci-dessus, il est possible, en pratique, de considérer des plaques 15 de terrain d'environ 10 m par 10 m.

L'acquisition d'une plaque 15 de terrain 5 fournit un modèle tri-dimensionnel géométrique ou modèle numérique de terrain local. Sur ce modèle numérique de terrain correspondant à une plaque 15, est effectuée une analyse de la forme qui a pour but de déterminer une vitesse maximale de franchissement 16 à laquelle le véhicule peut rouler sur ladite plaque 15. Cette vitesse maximale de franchissement 16 est la vitesse la plus grande à laquelle la plaque 15 de terrain 5 peut être traversée en toute sécurité. Cette analyse peut s'effectuer selon plusieurs méthodes.

Une première méthode, dite méthode temporelle, consiste à simuler le roulage d'un modèle, éventuellement simplifié, du véhicule 1 sur le modèle numérique de terrain de la plaque 15 analysée. La vitesse utilisée dans cette simulation est progressivement augmentée, jusqu'à ce qu'un seuil donné d'un critère soit atteint. Ce critère intègre, avantageusement, des notions de stabilité du véhicule, des notions de limite de confort tel que ressenti par l'équipage, le matériel embarqué ou le véhicule lui-même. Un exemple de limite de confort quantitatif est l'utilisation du débattement d'un élément de suspension. Au-delà d'une certaine valeur seuil, et notamment l'atteinte d'une butée, un débattement d'un élément de suspension est indicatif d'une accélération trop importante pour rester confortable.

Une seconde méthode, dite méthode fréquentielle, consiste à identifier la rugosité du terrain 5 sur le modèle numérique de terrain de la plaque 15, et à estimer la possibilité d'évolution du véhicule 1, à partir d'un tableau pré établi de correspondance entre la rugosité et la vitesse. L'identification de la rugosité, peut par exemple s'effectuer par une analyse fréquentielle, de type densité spectrale de puissance, du modèle numérique de terrain de la plaque 15. Le tableau de correspondance peut être déterminé par essai réel ou en simulation en effectuant des roulages d'un véhicule similaire sur des terrains de rugosité canonique donnée et en déterminant la vitesse maximale ne provoquant pas le dépassement d'un seuil forfaitaire, le cas échéant associé à un critère d'inconfort ou d'instabilité.

Une troisième méthode, dite méthode spatiale, correspond à un traitement analytique de la plaque 15 en considérant sa forme. Le principe est de décomposer la forme géométrique du modèle numérique de terrain de la plaque 15 en un ensemble d'obstacles locaux élémentaires correspondant respectivement à une marche, une cassure de pente et à un voilage du terrain. Pour chacun de ces obstacles types, on a déterminé au préalable la vitesse maximale locale de franchissement dudit obstacle. Cette méthode présente l'avantage d'être intrinsèquement surfacique en ce qu'elle peut donner une vitesse maximale de franchissement 16 pour chaque zone de la plaque 15 analysée.

Il est aussi possible de combiner les trois méthodes et d'appliquer tantôt l'une, tantôt l'autre, en fonction de la forme de la plaque 15, ou encore, de les utiliser simultanément en considérant une vitesse maximale de franchissement 16 résultante comme étant, par exemple, la moyenne pondérée des vitesses maximales de franchissement 16 obtenues par chacune des trois méthodes ou encore le minimum des vitesses obtenues par les trois méthodes ou encore toute combinaison ou arbitrage entre les résultats de ces trois méthodes.

La plaque 15 est une surface tri-dimensionnelle. Aux fins de représentation, cette plaque 15 est visualisée par un quadrilatère 19. Ce quadrilatère 19 est déterminé tel qu'il se projette sur le contour de la plaque 15 selon la projection ponctuelle centrée sur le point de vision situé au sommet du cône correspondant à la partie 6 du champ de vision 4. Ce quadrilatère 19 n'est pas nécessairement plan et peut être voilé dans l'espace.

Après l'acquisition d'une première plaque 15', une seconde plaque 15 peut être acquise. Les plaques sont, comme on l'a vu dans leur construction, déterminées jointives. A chaque plaque 15' (respectivement 15) ainsi successivement acquise, est associé un quadrilatère 19' (respectivement 19).

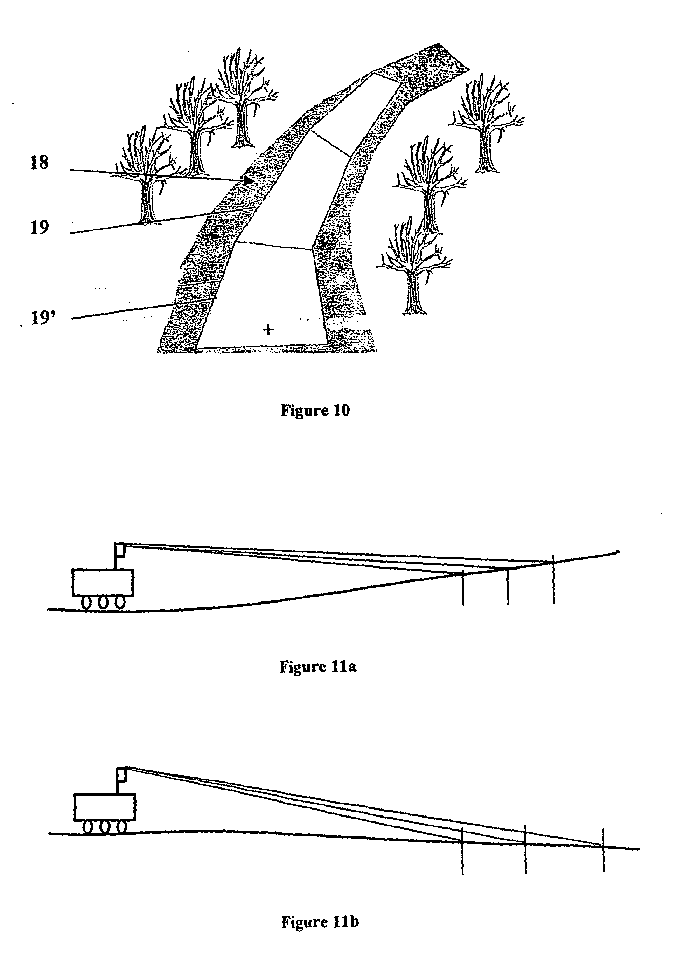

En joignant de manière continue cette succession de quadrilatères 19, on obtient un ruban continu ou chenal carrossable 18. Ce chenal carrossable 18 est la zone sur laquelle une acquisition du terrain 5 et une analyse ont été réalisées. La figure 10 illustre un exemple de chenal 18 tel qu'il peut être présenté à l'opérateur.

Pour chacune des plaques 15 et par extension, pour chacun des quadrilatères 19, constituant le chenal 18, une vitesse maximale de franchissement 16 a été déterminée. A partir de la vitesse actuelle du véhicule 1, est construit un gabarit de vitesse maximale de franchissement 17, permettant d'arriver sur la plaque 15 avec une vitesse compatible de la vitesse maximale de franchissement 16 de cette même plaque 15. Ce gabarit de vitesse 17 est déterminé le long de la trajectoire 14 du véhicule 1 de manière récursive en tenant compte de la pente du terrain et du potentiel d'adhérence disponible. Le potentiel d'adhérence du terrain est supposé connu. Il est possible de déterminer en fonction du véhicule 1, une décélération maximale admissible sans solliciter dangereusement le potentiel d'adhérence disponible. La détermination du potentiel d'adhérence ne fait pas l'objet du présent brevet.

On dispose pour chaque plaque 15 (respectivement 15') d'une vitesse maximale de franchissement 16 (respectivement 16') déterminée intrinsèquement en fonction de la géométrie de la plaque. En partant de la plaque 15 la plus éloignée, sa vitesse maximale de franchissement 16 est connue, en remontant sur la trajectoire 14 en supposant que le parcours s'effectue à la décélération/accélération maximale, on détermine une nouvelle vitesse maximale de franchissement pour la plaque 15' précédente. Cette nouvelle vitesse maximale de franchissement peut être différente de celle 16' déterminée précédemment par l'analyse géométrique de cette plaque précédente 15'. On conserve la valeur la plus faible de ces deux vitesses maximales de franchissement (vitesse déterminée intrinsèquement pour la plaque, et vitesse déterminée récursivement le long de la trajectoire) pour l'intégrer au gabarit de vitesse 17. On procède ainsi de plaque en plaque en remontant le long du chenal 18. Le gabarit de vitesse 17 ainsi obtenu est une courbe donnant une vitesse maximale de franchissement 16 en chaque point, le long de la trajectoire du véhicule 1, compatible de la vitesse instantanée du véhicule 1, des capacités d'accélération/freinage dudit véhicule 1 et du terrain rencontré sur la totalité du chenal 18 analysé.

Il est possible en fonction de ce gabarit 17 de vitesse maximale de contrôler la vitesse du véhicule 1 afin qu'elle ne dépasse pas le gabarit 17. Deux approches sont possibles. Dans une première approche totalement automatique, la vitesse du véhicule 1 est automatiquement asservie à la vitesse maximale calculée, correspondant à la valeur déterminée par le gabarit de vitesse 17. Il n'est dans cette approche besoin d'aucune interface homme-machine.

Dans une seconde approche semi-automatique, l'information est utilisée pour assister les choix du (télé)pilote. L'information d'analyse du terrain 5 est présentée au pilote sous forme graphique, schématisée par la représentation graphique du chenal carrossable 18 en superposition du terrain 5, tel qu'illustré par la figure 10. Le pilote est libre de commander la vitesse du véhicule tant que cette vitesse reste inférieure à celle du gabarit 17. Si elle tend à devenir supérieure au gabarit 17, un automatisme intervient sur la commande d'avancement et la limite afin que la vitesse reste à tout moment inférieure au gabarit 17 et que le véhicule 1 évolue à tout instant en sécurité.

Afin d'indiquer au pilote quelle zone du terrain 5 est analysée et lui donner des indications sur cette portion de terrain et les résultats de l'analyse qui a été pratiquée, le chenal 18, en tant que succession des quadrilatères 19 est affiché pour être visible du pilote.

Dans le cas d'un pilote percevant le terrain 5 en direct, avec un champ de vision 4 direct, ce champ de vision 4 lui apparaît au travers d'un pare-brise, ou le cas échéant au travers d'un système de renvoi optique : épiscope, périscope ou viseur. Dans tous les cas, il est possible de projeter le chenal 18 dans le champ de vision du pilote en superposition. Il est ainsi possible d'utiliser, à titre illustratif, une lame semi-transparente permettant une visualisation du chenal 18 directement sur le pare-brise, l'épiscope, le périscope ou le viseur. Il est aussi possible d'envisager une projection sur une lame semi-transparente localisée sur la visière du casque du pilote.

Dans le cas d'un (télé-)pilote percevant le terrain 5 par l'intermédiaire d'un écran de visualisation lui renvoyant une image, par exemple acquise par une caméra vidéo située sur le véhicule, ladite caméra vidéo est avantageusement localisé sur le véhicule à proximité du moyen d'acquisition 2 et dispose avantageusement d'un champ de vision proche, ou incluant le champ de vision 4 du moyen d'acquisition 2. Il est alors possible d'afficher le chenal 18 en superposition de l'image vidéo du terrain 5, sur le même écran de visualisation, après application du changement de repère adéquat.

Dans les deux cas, la représentation du chenal se limite comme montré sur la figure 10 au tracé filaire des segments/côtés des quadrilatères 19. Un indice surfacique peut être utilisé pour faire ressortir une information dans la surface du quadrilatère, par exemple une couleur, un niveau de gris ou des hachures, mais cette couleur reste transparente. Ceci afin de ne pas masquer l'image du terrain 5. L'information de carrossabilité est ajoutée au terrain, auquel elle ne se substitue pas. On est dans une approche de « réalité augmentée » par opposition à une approche de « réalité virtuelle ». Des effets de sur-brillance ou de clignotement linéaires ou surfaciques peuvent être utilisés pour mettre en exergue un quadrilatère 19 donné.

Il est ainsi avantageux de considérer N+1 représentations graphiques différentes pour symboliser des états différents. Il est ainsi possible de faire varier la représentation des traits utilisés pour les contours de chaque quadrilatère parmi : trait continu, pointillé, tireté,... Il est aussi possible de faire varier la surface du quadrilatère avec des couleurs, des niveaux de gris différents, des hachures ou toute autre texture. Dans tous les cas on maintient une certaine transparence afin de laisser libre la perception du terrain réel.

Une représentation graphique particulière est retenue pour indiquer un quadrilatère infranchissable, correspondant à une vitesse maximale de franchissement nulle. Les N autres représentations graphiques peuvent par exemple être associées chacune à une portion parmi N de l'étendue totale de vitesse accessible au véhicule 1. Cette étendue totale de vitesse correspond à la plage depuis la vitesse nulle jusqu'à la vitesse maximale du véhicule. Cette étendue est partitionnée en N sous plages de vitesse. A chaque sous plage est associée, pour la représentation graphique, une symbolisation graphique linéaire ou surfacique. Ainsi au premier coup d'oeil l'opérateur dispose d'une indication de la carrossabilité, quantifiée en terme de vitesse de franchissement.

De manière similaire un quadrilatère 19 correspondant à une plaque 15 délicate peut être, par exemple, visualisé par une représentation graphique particulière correspondant à celle associée à la non franchissabilité ou à une autre représentation graphique dédié à cet état temporaire, tant que sa franchissabilité n'est pas établie. Ainsi si l'acquisition ou l'analyse d'une plaque 15 pose des problèmes, Il est possible d'adopter une stratégie d'attente. Le pilote est averti par la représentation graphique adaptée, la plaque non encore analysée se voit affectée, au moins temporairement, d'une vitesse maximale de franchissement 16 nulle. Le gabarit de vitesse s'en trouve automatiquement réduit. En conséquence, ceci entraîne une approche du véhicule 1 à vitesse plus réduite. Ceci permet d'obtenir du temps supplémentaire permettant de réitérer l'acquisition et/ou l'analyse de la plaque. Cette analyse effectuée de plus près, (Cf. Figure 5b) a plus de chance d'aboutir. Dès qu'un résultat est obtenu, le pilote est prévenu par l'affichage qui redevient normal. La vitesse maximale de franchissement 16 et le gabarit 17 sont recalculés.

Une autre alternative consiste à autoriser le pilote à valider, sous son contrôle, une plaque 15, pour laquelle il arrête l'acquisition et l'analyse et lève la limitation. Le pilote, sous sa responsabilité, reprend dans ce cas la main sur l'automatisme de limitation de la vitesse.

L'acquisition d'une plaque 15 est idéalement réalisée en un instant. Dans la réalité le double balayage angulaire du faisceau 3 nécessaire pour parcourir la plaque 15 et le temps de chaque mesure de distance sur chaque point prend un certain temps. Pendant ce temps le véhicule continue son déplacement. Ce déplacement s'effectuant en tout-terrain, l'orientation du véhicule est en permanence modifiée. Si le moyen d'acquisition 2 est directement solidaire du véhicule 1, ceci a pour conséquence de dévier le faisceau 3, qui ne vise plus le point de la plaque 15 souhaité. Ces modifications d'orientation du faisceau 3, relativement au temps de balayage aux vitesses élevées que l'on tente de maintenir, conduisent à des déformations de l'acquisition de la plaque 15 trop importantes pour permettre une exploitation. Pour obtenir un résultat exploitable, il est nécessaire de stabiliser l'acquisition. Ceci peut être réalisé par exemple par une plate-forme gyro-stabilisée, bien connue de l'homme de l'art, et qui permet, insérée entre le moyen d'acquisition 2 et le véhicule 1, de maintenir le moyen d'acquisition 2 dans une orientation quasi constante relativement au terrain, malgré les changements d'orientation du véhicule 1. Ceci ne fait pas l'objet du présent brevet.

On a vu précédemment que la résolution minimale est calculée, pour un véhicule donné, en longueur sur le terrain 5, par la dimension du plus grand obstacle, qu'il soit en relief positif (bosse) ou négatif (trou), que peut ignorer le véhicule 1. De cette longueur et à la distance d'analyse envisagée pour une plaque 15, on déduit l'angle maximal de balayage séparant deux points d'acquisition, déterminant ainsi une résolution angulaire. On conçoit aisément que pour une longueur ainsi déterminée l'angle correspondant varie en fonction de la pente du terrain au niveau de la plaque 15. Ou ce qui est équivalent, pour un même angle de balayage, la distance correspondante sur le terrain va être modifiée. Ceci est illustré par les figures 11a et 11b. Ainsi, pour un angle constant de balayage en site, une pente plus forte comme sur la figure 11a, va conduire à une distance faible. Si la pente diminue, comme illustré sur la figure 11b, la distance augmente proportionnellement.

Compte-tenu du nombre de points d'acquisition limité, il est avantageux d'optimiser leur utilisation. Une approche intéressante consiste à tenir compte pour cela de la pente et du dévers du terrain au niveau de la plaque 15. Ainsi dans une zone de forte pente/dévers, il est judicieux d'augmenter le pas angulaire d'acquisition et réciproquement dans une zone de faible pente/dévers il est judicieux de le réduire. Dans une zone aveugle il n'est pas utile de perdre des points à réaliser des acquisitions. Pour cela il est nécessaire de disposer, avant l'acquisition d'une plaque 15, de sa forme, même grossière en terme de pente et de dévers.

Le temps de cycle complet d'acquisition d'une plaque 15 et de traitement complet de son analyse de carrossabilité est raisonnablement d'une seconde, pour être compatible des autres contraintes du système. Ce cycle complet comprend dans un premier temps un temps d'acquisition suivi ensuite d'un temps dédié aux calculs d'analyse de la plaque 15 acquise. La plaque 15 acquise a raisonnablement une taille correspondant au sol à un carré de 10 m par 10 m. Compte tenu d'une résolution indicative de l'ordre de 10 cm, cette acquisition nécessite 10000 points. Le temps d'acquisition d'un point étant inférieur ou égal à 30 micro seconde, l'acquisition d'une plaque 15 nécessite environ 0,3 seconde. Le moyen d'acquisition 2 n'est pas utilisé durant la phase de traitement, soit pendant 0,7 seconde. L'invention met à profit cette disponibilité pour effectuer une pré-acquisition grossière de la nouvelle plaque 15.

Afin de préparer l'acquisition d'une nouvelle plaque 15, il est avantageux d'effectuer au moins une pré-acquisition. Afin de ne pas y consacrer trop de temps cette acquisition est effectuée avec un pas de balayage plus important. Le maillage de la pré-acquisition de ladite plaque 15 est ainsi plus grossier. On peut ainsi effectuer un sous-échantillonnage de l'ordre d'un point sur 2, sur 3 ou sur p dans chacune des deux dimensions. La pré-acquisition d'une plaque 15 complète est donc effectuée en 1/4, 1/9 ou 1/p² fois moins de temps que l'acquisition complète définitive à la fréquence spatiale nominale d'une plaque 15, ce qui reste tout à fait compatible des temps de disponibilité du moyen d'acquisition 2. Le modèle numérique de terrain de la plaque 15, ainsi obtenu par cette acquisition préalable à maillage plus lâche, plus grossier, est moins détaillé. Il permet cependant de déterminer avec profit des éléments caractéristiques de la plaque 15 tels que la pente et le dévers moyen. Un aperçu, même grossier de la forme de la plaque 15 permet d'estimer l'incidence du faisceau 3 lors de la mesure de distance. Ceci permet de déterminer des zones qui nécessiteront une plus ou moins grande densité de points de mesure lors de l'acquisition définitive ultérieure. Il est ainsi possible de déterminer pour la plaque 15, avant son acquisition définitive, une répartition optimale des points d'acquisition telle que ces points d'acquisition présentent une distance entre eux, mesurée sur le sol, encore nommée pas spatial, constant. Ce pas spatial est avantageusement inférieur ou égal à la résolution fixée pour détecter un obstacle potentiellement dangereux. Ceci permet d'optimiser l'acquisition définitive de la plaque 15, en pilotant le balayage du moyen d'acquisition 2 en fonction de cette répartition optimale des points d'acquisition.

## Revendications

1. Dispositif d'assistance au pilotage en tout terrain d'un véhicule (1) comprenant un moyen d'acquisition (2) de la géométrie du terrain (5) utilisant un faisceau (3) permettant une mesure de distance dans l'axe dudit faisceau, auquel est imposé un pilotage angulaire selon deux directions sensiblement perpendiculaires, dans un champ de vision (4) situé devant le véhicule (1), **caractérisé en ce que** le moyen d'acquisition (2) est relié au véhicule et est configuré pour effectuer une acquisition partielle limitée à une plaque (15) de terrain correspondant à une partie (6) du champ de vision (4), ladite plaque (15, 15') étant limitée d'un côté proche du véhicule par un premier segment proche (7, 7'), d'un côté distant du véhicule par un second segment distant (8, 8') et latéralement par deux segments (9, 10, 9', 10') reliant les extrémités desdits premier et second segments et ladite plaque (15, 15') comprenant un segment médian (24, 24').

2. Dispositif d'assistance au pilotage selon la revendication 1, **caractérisé en ce que** le moyen d'acquisition (2) est configuré pour effectuer une nouvelle plaque (15) après avoir acquis une plaque précédente (15').

3. Dispositif d'assistance au pilotage selon la revendication 2, **caractérisé en ce que** le moyen d'acquisition (2) est fixé sur le véhicule (1).

4. Dispositif d'assistance au pilotage selon la revendication 2, **caractérisé en ce que** le moyen d'acquisition (2) est fixé sur un drone (21) mobile indépendamment du véhicule (1).

5. Dispositif d'assistance au pilotage selon la revendication 1, **caractérisé en ce que** le premier segment proche (7) d'une nouvelle plaque (15) est confondu avec le second segment distant (8') d'une plaque précédente (15').

6. Dispositif d'assistance au pilotage selon la revendication 5, **caractérisé en ce que** le segment médian (24) d'une nouvelle plaque (15) est perpendiculaire au second segment distant (8) de ladite nouvelle plaque (15), et présente une longueur égale au produit de la vitesse maximale (22) du véhicule (1) par un temps de traitement (20) nécessaire à l'acquisition et au traitement de la plaque (15), ledit segment médian (24) comprenant une première extrémité (25) et une seconde extrémité (26), la première extrémité (25) est confondue avec le milieu du premier segment proche (7) de la nouvelle plaque (15) et la seconde extrémité (26) est confondue avec le milieu du second segment distant(8) de la nouvelle plaque (15).

7. Dispositif d'assistance au pilotage selon la revendication 6, **caractérisé en ce que** le segment médian (24) de la nouvelle plaque (15) délimite un angle global (27) avec le segment médian (24') de la plaque précédente (15'), l'angle global (27) étant la somme d'un angle de commande (28) et d'un angle de correction (29), le véhicule (1) étant commandé en direction suivant un arc de cercle de commande (30) passant par la position du véhicule (1) tangent à l'axe du véhicule (1) et de rayon égal au rayon de virage commandé.

8. Dispositif d'assistance au pilotage selon la revendication 7, **caractérisé en ce que** l'angle de commande (28) est égal à l'angle entre la tangente (32) à l'arc de cercle de commande (30) au point d'intersection (31) entre ledit arc de cercle de commande (30) et le premier segment proche (7) de la nouvelle plaque (15), avec le segment médian (24') de la plaque précédente (15').

9. Dispositif d'assistance au pilotage selon la revendication 8, **caractérisé en ce que** l'angle de commande (28) est temporellement filtré sur un horizon sensiblement égal à une seconde.

10. Dispositif d'assistance au pilotage selon la revendication 7, **caractérisé en ce que** l'angle de correction (29) est égal à une constante de correction (38) que multiplie une distance de correction (33), cette distance de correction (33) étant mesurée en ligne droite entre un point de commande (34) et la première extrémité (25) du segment médian (24) de la nouvelle plaque (15), ledit point de commande (34) étant situé sur l'arc de cercle de commande (30) à une distance (36) du véhicule (1), mesurée le long dudit arc de cercle de commande (34), ladite distance (36) étant égale à une distance (37) mesurée entre ladite première extrémité (25) et un point de projection (47), cette distance (37) étant mesurée le long d'une ligne brisée (35) suivant les segments médians (24,24'), le point de projection (47) étant le point de ladite ligne brisée (35) le plus proche du véhicule (1).

11. Dispositif d'assistance au pilotage selon l'une quelconque des revendications précédentes, **caractérisé en ce qu'**au moins une pré-acquisition à maillage grossier d'une plaque (15) est effectuée pour optimiser l'acquisition définitive ultérieure de ladite plaque (15) pour déterminer la pente et le dévers moyen de la plaque (15), l'acquisition préalable permettant de déterminer une répartition à pas constant, des points d'acquisition sur la plaque (15), ladite répartition étant utilisée pour l'acquisition définitive.

12. Dispositif d'assistance au pilotage selon l'une quelconque des revendications précédentes, **caractérisé en ce que** la plaque (15) est analysée pour déterminer une vitesse maximale de franchissement (16) de ladite plaque (15).

13. Dispositif d'assistance au pilotage selon la revendication 12, **caractérisé en ce que** la vitesse maximale de franchissement (16) est déterminée par une méthode temporelle simulant le roulage d'un modèle simplifié du véhicule (1) sur la plaque (15) en variant la vitesse dudit modèle jusqu'à dépassement d'un critère d'inconfort et/ou d'instabilité.

14. Dispositif d'assistance au pilotage selon la revendication 12, **caractérisé en ce que** la vitesse maximale de franchissement (16) est déterminée par une méthode fréquentielle déterminant la rugosité du terrain (5) et lui faisant correspondre une vitesse maximale de franchissement (16) par un tableau de correspondance pré-établi.

15. Dispositif d'assistance au pilotage selon la revendication 12, **caractérisé en ce que** la vitesse maximale de franchissement (16) est déterminée par une méthode spatiale consistant à découper la plaque (15) en éléments de relief élémentaires auxquels sont respectivement associées des vitesses maximales de franchissement (16).

16. Dispositif d'assistance au pilotage selon l'une des revendications 12 à 15, **caractérisé en ce que** la vitesse maximale de franchissement (16) est déterminée par une méthode combinant les méthodes temporelle, fréquentielle, spatiale.

17. Dispositif d'assistance au pilotage selon l'une quelconque des revendications précédentes, **caractérisé en ce que** chaque plaque (15) est visualisée par un quadrilatère (19), dont les segments des côtés se superposent avec les segments (7,8,9,10) de la plaque (15).

18. Dispositif d'assistance au pilotage selon l'une quelconque des revendications précédentes, **caractérisé en ce qu'**un chenal (18) est construit en assemblant bout à bout les quadrilatères (19',19) issus des plaques (15',15).

19. Dispositif d'assistance au pilotage selon l'une des revendications 12 à 18, **caractérisé en ce qu'**un gabarit (17) de vitesse maximale de franchissement est construit de manière récursive en fonction de la vitesse maximale de franchissement (16) déterminée pour chaque plaque (15) du chenal (18), garantissant que l'on pourra atteindre une plaque (15) donnée à une vitesse inférieure à la vitesse maximale de franchissement (16) de cette plaque.

20. Dispositif d'assistance au pilotage selon la revendication 19, **caractérisé en ce que** le gabarit (17) de vitesse est tel que la décélération maximale, le long de ce gabarit, reste à tout instant inférieure au potentiel d'adhérence disponible.

21. Dispositif d'assistance au pilotage selon l'une des revendications précédentes, **caractérisé en ce que** le chenal (18) constitué de la succession de quadrilatères (19',19) est projeté en superposition du champ de vision (4) du pilote.

22. Dispositif d'assistance au pilotage selon la revendication 21, **caractérisé en ce que** le champ de vision (4) est vu directement et **en ce que** la projection du chenal (18) s'effectue en transparence sur une lame semi-réfléchissante intercalaire.

23. Dispositif d'assistance au pilotage selon la revendication 22, **caractérisé en ce que** le champ de vision (4) est vu sur un écran de visualisation et **en ce que** le chenal (18) est projeté en transparence sur ledit écran de visualisation.

24. Dispositif d'assistance au pilotage selon l'une quelconque des revendications 21 à 23, **caractérisé en ce que** la représentation graphique des quadrilatères (19,19') utilise une symbolique graphique pour signifier qu'une plaque est infranchissable.

25. Dispositif d'assistance au pilotage selon l'une quelconque des revendications 21 à 24, **caractérisé en ce que** la représentation graphique des quadrilatères (19) utilise N symboliques graphiques, pour signifier qu'une plaque est franchissable à une vitesse appartenant à l'une des N zones partageant la plage totale de vitesse.

## Claims

1. A steering aid device for a vehicle (1) in off-track comprising acquisition means (2) for the geometry of the land (5) which use a beam (3) enabling a distance to be measured in said beam, to which angular steering is imposed in two substantially perpendicular directions, in a field of vision (4) located in front of the vehicle (1), wherein the acquisition means (2) are linked to the vehicle and configured to perform a partial acquisition limited to one sector (15) of land corresponding to one part (6) of the field of vision (4), said sector (15, 15') being limited by a side close to the vehicle by a first close segment (7, 7'), by a side at a distance from the vehicle by a second distant segment (8, 8') and laterally by two segments (9, 10, 9', 10') linking the ends of said first and second segments and said sector (15, 15') comprising a median segment (24, 24').

2. A steering aid device according to Claim 1, wherein the acquisition means (2) are configured so as to acquire a new sector (15) once the previous sector (15') has been acquired.

3. A steering aid device according to Claim 2, wherein the acquisition means (2) are fixed to the vehicle (1).

4. A steering aid device according to Claim 2, wherein the acquisition means (2) are fixed onto a drone (21) able to move independently of the vehicle (1).

5. A steering aid device according to Claim 1, wherein the first close segment (7) of a new sector (15) matches the second distant segment (8') of a previous sector (15').

6. A steering aid device according to Claim 5, wherein the median segment (24) of a new sector (15) is perpendicular to the second distant segment (8) of said new sector (15), and has a length equal to the product of the maximal speed of the vehicle (22) by a processing time (20) required for the acquisition and processing of the sector (15), said median segment (24) comprising a first extremity (25) and a second extremity (26), the first extremity (25) matches the middle of the first close segment (7) of the new sector (15) and the second extremity (26) matches the middle of the second distant segment (8) of the new sector (15).

7. A steering aid device according to Claim 6, wherein the second median segment (24) of the new sector (15) delimits an overall angle (27) with the median segment (24') of the previous sector (15'), the overall angle (27) being the sum of the drive angle (28) and the correction angle (29), the direction of the vehicle (1) being controlled in an operating arc of circle (30) which passes by the position of the vehicle (1) tangent to the vehicle (1) axis with a radius equal to the radius of the turning radius commanded.

8. A steering aid device according to Claim 7, wherein the drive angle (28) is equal to the angle between the tangent (32) to the operating arc of circle (30) at the point of intersection (31) between said operating arc of circle (30) and the first close segment (7) of the new sector (15) and the median segment (24') of the previous sector (15').

9. A steering aid device according to Claim 8, wherein the drive angle (28) is temporally filtered on a horizon substantially equal to one second.

10. A steering aid device according to Claim 7, wherein the correction angle (29) is equal to a correction constant (38) which multiplies a correction distance (33), this correction distance (33) being measured in a straight line between a control point (34) and the first extremity (25) of the median segment (24) of the new sector (15), said control point (34) being located on the operating arc of a circle (30) at a distance (36) from the vehicle (1), measured along said operating arc of circle (30), said distance (36) being equal to a distance (37) measured between said first extremity (25) and a projection point (47), this distance (37) being measured along a broken line (35) along median segments (24, 24'), the projection point (47) being the point of said broken line (35) which is the closest to the vehicle (1).

11. A steering aid device according to any one of the above Claims, wherein at least one rough meshing preacquisition of a sector (15) is performed to optimise the subsequent final acquisition of said sector (15) to determine the mean slope and cant of the sector (15), the prior acquisition enabling a uniform pitch distribution to be determined of the acquisition points on the sector (15), said distribution being used for the final acquisition.

12. A steering aid device according to any one of the above Claims, wherein the sector (15) is analysed to determine a maximal crossing speed (16) for said sector (15).

13. A steering aid device according to Claim 12, wherein the maximal crossing speed (16) is determined by a temporal method which simulates the passage of a simplified model of the vehicle (1) over the sector (15) varying the speed of said model until a criterion of discomfort and/or instability is exceeded.

14. A steering aid device according to Claim 12, wherein the maximal crossing speed (16) is determined by a frequential method which determines the roughness of the terrain (5) and makes it correspond to a maximal crossing speed (16) by a pre-established correspondence table.

15. A steering aid device according to Claim 12, wherein the maximal crossing speed (16) is determined by a spatial method consisting in dividing the sector (15) into elementary relief element to which maximal crossing speeds (16) are respectively associated.

16. A steering aid device according to one of Claims 12 to 15, wherein the maximal crossing speed (16) is determined by a method which combines the temporal, frequential and spatial methods.

17. A steering aid device according to any one of the previous Claims, wherein each sector (15) is visualised by a quadrilateral (19), whose side segments are superimposed on segments (7, 8, 9, 10) of the sector (15).

18. A steering aid device according to any one of the previous Claims, wherein a channel (18) is formed by assembling the quadrilaterals (19', 19) from the sectors (15', 15) end to end.

19. A steering aid device according to one of Claims 12 to 18, wherein a maximal crossing speed template (17) is constructed recursively according to the maximal crossing speed (16) determined for each sector (15) of the channel (18), thereby ensuring that a given sector (15) may be reached at a speed less than the maximal crossing speed (16) of this sector.

20. A steering aid device according to Claim 19, wherein the speed template is such that the maximal deceleration along this template remains at all times less than the available road grip potential.

21. A steering aid device according to one of the previous Claims, wherein the channel (18), constituted by a succession of quadrilaterals (19', 19) is projected and superimposed on the driver's field of vision (4).

22. A steering aid device according to Claim 21, wherein the field of vision (4) is seen directly and in that the projection of the channel (18) is made transparently on a semi-reflective interlayer.

23. A steering aid device according to Claim 22, wherein the field of vision (4) is seen on a display screen and wherein the channel is projected transparently onto said display screen.

24. A steering aid device according to any one of Claims 21 to 23, wherein the graphic representation of the quadrilaterals (19, 1ç') uses a graphic symbol to indicate that a sector can not be crossed.

25. A steering aid device according to any one of Claims 21 to 24, wherein the graphic representation of the quadrilaterals (19) uses N graphic symbols to indicate that a sector may be crossed at a speed belonging to one of the N zones forming the total speed range.

## Patentansprüche

1. Vorrichtung zur Assistenz der Steuerung im Gelände eines Fahrzeugs (1), umfassend ein Mittel zur Erfassung (2) der Geometrie des Geländes (5) unter Verwendung eines Bündels (3), welches eine Abstandsmessung in der Achse des genannten Bündels, der eine Winkelsteuerung gemäß zwei im wesentlichen senkrechten Richtungen auferlegt ist, in einem vor dem Fahrzeug (1) angeordneten Sichtfeld (4) ermöglicht, **dadurch gekennzeichnet, dass** das Mittel zur Erfassung (2) mit dem Fahrzeug verbunden ist und konfiguriert ist, um eine teilweise Erfassung auszuführen, die auf eine Geländeplatte (15) begrenzt ist, die einem Abschnitt (6) des Sichtfeldes (4) entspricht, wobei die genannte Platte (15, 15') an einer dem Fahrzeug nahe liegenden Seite durch eine erste, nahe Strecke (7, 7'), an einer vom Fahrzeug entfernten Seite durch eine zweite, entfernte Strecke (8, 8') und seitlich durch zwei Strecken (9, 10, 9', 10') begrenzt wird, welche die Enden der genannten ersten und zweiten Strecken verbinden, und wobei die genannte Platte (15, 15') eine mittlere Strecke (24, 24') umfasst.

2. Vorrichtung zur Assistenz der Steuerung nach Anspruch 1, **dadurch gekennzeichnet, dass** das Mittel zur Erfassung (2) konfiguriert ist, um eine neue Platte (15) zu bewerkstelligen, nachdem eine vorhergehende Platte (15') erfasst wurde.

3. Vorrichtung zur Assistenz der Steuerung nach Anspruch 2, **dadurch gekennzeichnet, dass** das Mittel zur Erfassung (2) am Fahrzeug (1) befestigt ist.

4. Vorrichtung zur Assistenz der Steuerung nach Anspruch 2, **dadurch gekennzeichnet, dass** das Mittel zur Erfassung (2) an einer beweglichen, vom Fahrzeug (1) unabhängigen Drohne (21) befestigt ist.

5. Vorrichtung zur Assistenz der Steuerung nach Anspruch 1, **dadurch gekennzeichnet, dass** die erste, nahe Strecke (7) einer neuen Platte (15) mit der zweiten, entfernten Strecke (8') einer vorhergehenden Platte (15') zusammenfällt.

6. Vorrichtung zur Assistenz der Steuerung nach Anspruch 5, **dadurch gekennzeichnet, dass** die mittlere Strecke (24) einer neuen Platte (15) senkrecht zur zweiten, entfernten Strecke (8) der genannten neuen Platte (15) steht und eine Länge aufweist, die gleich dem Produkt aus der maximalen Geschwindigkeit (22) des Fahrzeugs (1) und einer Verarbeitungszeit (20) ist, die zur Erfassung und Verarbeitung der Platte (15) notwendig ist, wobei die genannte mittlere Strecke (24) ein erstes Ende (25) und ein zweites Ende (26) umfasst, wobei das erste Ende (25) mit der Mitte der ersten, nahen Strecke (7) der neuen Platte (15) zusammenfällt und das zweite Ende (26) mit der Mitte der zweiten, entfernten Strecke (8) der neuen Platte (15) zusammenfällt.

7. Vorrichtung zur Assistenz der Steuerung nach Anspruch 6, **dadurch gekennzeichnet, dass** die mittlere Strecke (24) der neuen Platte (15) mit der mittleren Strecke (24') der vorhergehenden Platte (15') einen gesamten Winkel (27) einschließt, wobei der gesamte Winkel (27) die Summe eines Steuerwinkels (28) und eines Korrekturwinkels (29) ist, wobei das Fahrzeug (1) in der Richtung gemäß einem Steuerkreisbogen (30) gesteuert wird, der durch die Position des Fahrzeugs (1) verläuft, die an der Achse des Fahrzeugs (1) tangiert und einen Radius, der gleich dem gesteuerten Kurvenradius ist, besitzt.

8. Vorrichtung zur Assistenz der Steuerung nach Anspruch 7, **dadurch gekennzeichnet, dass** der Steuerwinkel (28) gleich dem Winkel zwischen der Tangente (32) an den Steuerkreisbogen (30) am Schnittpunkt (31) zwischen dem genannten Steuerkreisbogen (30) und der ersten, nahen Strecke (7) der neuen Platte (15) mit der mittleren Strecke (24') der vorhergehenden Platte (15') ist.

9. Vorrichtung zur Assistenz der Steuerung nach Anspruch 8, **dadurch gekennzeichnet, dass** der Steuerwinkel (28) über einen Horizont von im wesentlichen gleich einer Sekunde zeitlich gefiltert wird.

10. Vorrichtung zur Assistenz der Steuerung nach Anspruch 7, **dadurch gekennzeichnet, dass** der Korrekturwinkel (29) gleich einer Korrekturkonstante (38) ist, die einen Korrekturabstand (33) multipliziert, wobei dieser Korrekturabstand (33) in gerader Linie zwischen einem Steuerpunkt (34) und dem ersten Ende (25) der mittleren Strecke (24) der neuen Platte (15) gemessen wird, wobei der genannte Steuerpunkt (34) auf dem Steuerkreisbogen (30) in einem Abstand (36) vom Fahrzeug (1) angeordnet ist, der entlang des genannten Steuerkreisbogens (34) gemessen wird, wobei der genannte Abstand (36) gleich einem zwischen dem genannten ersten Ende (25) und einem Abbildungspunkt (47) gemessenen Abstand (37) ist, wobei dieser Abstand (37) entlang einer gepunkteten Linie (35) entsprechend den mittleren Strecken (24, 24') gemessen wird, wobei der Abbildungspunkt (47) der dem Fahrzeug (1) am nächsten liegende Punkt der genannten gepunkteten Linie (35) ist.

11. Vorrichtung zur Assistenz der Steuerung nach irgendeinem der vorhergehenden Ansprüche, **dadurch gekennzeichnet, dass** wenigstens eine grobmaschige Vor-Erfassung einer Platte (15) vorgenommen wird, um die spätere, definitive Erfassung der genannten Platte (15) zu optimieren, um das Gefälle und die mittlere Kurvenüberhöhung der Platte (15) festzulegen, wobei die vorherige Erfassung es ermöglicht, eine Verteilung der Erfassungspunkte in konstanten Schritten über die Platte (15) festzulegen, wobei die genannte Verteilung für die definitive Erfassung verwendet wird.

12. Vorrichtung zur Assistenz der Steuerung nach irgendeinem der vorhergehenden Ansprüche, **dadurch gekennzeichnet, dass** die Platte (15) analysiert wird, um eine maximale Geschwindigkeit zur Überwindung (16) der genannten Platte (15) zu bestimmen.

13. Vorrichtung zur Assistenz der Steuerung nach Anspruch 12, **dadurch gekennzeichnet, dass** die maximale Geschwindigkeit zur Überwindung (16) durch ein zeitliches Verfahren bestimmt wird, welches das Rollen eines vereinfachten Modells des Fahrzeugs (1) über die Platte (15) simuliert, wobei die Geschwindigkeit des genannten Modells bis zum Überschreiten eines Kriteriums von Unbequemlichkeit und/oder von Instabilität variiert wird.

14. Vorrichtung zur Assistenz der Steuerung nach Anspruch 12, **dadurch gekennzeichnet, dass** die maximale Geschwindigkeit zur Überwindung (16) durch ein frequentielles Verfahren bestimmt wird, das die Rauhigkeit des Geländes (5) bestimmt und ihr eine maximale Geschwindigkeit zur Überwindung (16) durch eine voreingerichtete Korrespondenztabelle zuordnet.

15. Vorrichtung zur Assistenz der Steuerung nach Anspruch 12, **dadurch gekennzeichnet, dass** die maximale Geschwindigkeit zur Überwindung (16) durch ein räumliches Verfahren bestimmt wird, das darin besteht, die Platte (15) in elementare Reliefelemente zu zerschneiden, denen jeweils maximale Geschwindigkeiten zur Überwindung (16) zugeordnet werden.

16. Vorrichtung zur Assistenz der Steuerung nach einem der Ansprüche 12 bis 15, **dadurch gekennzeichnet, dass** die maximale Geschwindigkeit zur Überwindung (16) durch ein Verfahren bestimmt wird, welches das zeitliche, frequentielle und räumliche Verfahren kombiniert.

17. Vorrichtung zur Assistenz der Steuerung nach irgendeinem der vorhergehenden Ansprüche, **dadurch gekennzeichnet, dass** jede Platte (15) durch ein Viereck (19) visualisiert wird, dessen Strecken der Seiten sich mit den Strecken (7, 8, 9, 10) der Platte (15) überdecken.

18. Vorrichtung zur Assistenz der Steuerung nach irgendeinem der vorhergehenden Ansprüche, **dadurch gekennzeichnet, dass** ein Kanal (18) hergestellt wird, indem die von den Platten (15', 15) abgeleiteten Vierecke (19, 19') stumpf aneinander gesetzt werden.

19. Vorrichtung zur Assistenz der Steuerung nach einem der Ansprüche 12 bis 18, **dadurch gekennzeichnet, dass** ein Profil (17) von maximaler Geschwindigkeit zur Überwindung auf rekursive Weise in Abhängigkeit der für jede Platte (15) des Kanals (18) bestimmte maximale Geschwindigkeit zur Überwindung (16) gebildet wird, so dass garantiert wird, dass eine gegebene Platte (15) mit einer Geschwindigkeit kleiner als die maximale Geschwindigkeit zur Überwindung (16) dieser Platte erreicht werden kann.

20. Vorrichtung zur Assistenz der Steuerung nach Anspruch 19, **dadurch gekennzeichnet, dass** das Geschwindigkeitsprofil (17) derartig ist, dass die maximale Verzögerung entlang dieses Profils zu jedem Zeitpunkt kleiner als das verfügbare Griffigkeitspotential verbleibt.

21. Vorrichtung zur Assistenz der Steuerung nach irgendeinem der vorhergehenden Ansprüche, **dadurch gekennzeichnet, dass** der aus der Folge von Vierecken (19, 19') gebildete Kanal (18) in Überlagerung des Sichtfeldes (4) des Piloten abgebildet wird.

22. Vorrichtung zur Assistenz der Steuerung nach Anspruch 21, **dadurch gekennzeichnet, dass** das Sichtfeld (4) direkt gesehen wird und dass die Abbildung des Kanals (18) mit Transparenz auf einem halbreflektierenden, zwischengeschalteten Blättchen erfolgt.

23. Vorrichtung zur Assistenz der Steuerung nach Anspruch 22, **dadurch gekennzeichnet, dass** das Sichtfeld (4) auf einem Bildschirm gesehen wird und dass der Kanal (18) mit Transparenz auf dem genannten Bildschirm abgebildet wird.

24. Vorrichtung zur Assistenz der Steuerung nach einem der Ansprüche 21 bis 23, **dadurch gekennzeichnet, dass** die graphische Darstellung der Vierecke (19, 19') eine graphische Symbolik verwendet, um zu bedeuten, dass eine Platte unüberwindbar ist.

25. Vorrichtung zur Assistenz der Steuerung nach einem der Ansprüche 21 bis 24, **dadurch gekennzeichnet, dass** die graphische Darstellung der Vierecke (19) N graphische Symboliken verwendet, um zu bedeuten, dass eine Platte mit einer zu einer der N Zonen zugehörigen Geschwindigkeit überwindbar ist, die den gesamten Geschwindigkeitsbereich aufteilen.
